# EUROPEAN PATENT APPLICATION

(11) **EP 4 760 513 A1**
(43) Date of publication of application: **17.06.2026**
(21) Application number: 25218941.0
(22) Date of filing: 27.11.2025
(51) Int. Cl.: G06F 12/02, G06F 3/06, G06F 12/0862, G06F 12/0868, G06F 12/126

(54) **STORAGE DEVICE, STORAGE SYSTEM INCLUDING THE SAME AND OPERATING METHOD THEREOF**

(30) Priority: 10.12.2024 KR 20240182942
(71) Applicant: Samsung Electronics Co., Ltd., Suwon-si, Gyeonggi-do 16677 (KR)
(72) Inventor: KWON, Jea-Young, 16677 Suwon-si, Gyeonggi-do (KR); KIM, Jaesub, 16677 Suwon-si, Gyeonggi-do (KR)
(74) Representative: Kuhnen & Wacker Patent- und Rechtsanwaltsbüro PartG mbB

(57) **Abstract**

The present disclosure relates to a storage system. The storage system includes a host device (20) including a command queue (23) configured to queue commands, a non-volatile memory device (300_1) configured to store a map information data set (310) for converting a logical address into a physical address, a storage controller (200) configured to store a mapping table set (232) in a volatile memory (230) based on the map information data set (310), in which the host device (20) may be configured to transmit a first logical address range, which is associated with a first command (CMD1) to be queued in the command queue (23) of the host device (20), to the storage controller (200), and the storage controller (200) may be configured to receive the first logical address range and to store a first mapping table (MT1), which is associated with first map information data corresponding to the first logical address range among the map information data set (310), in the volatile memory (230).

## Description

### BACKGROUND

### Field

The present disclosure relates to a storage device, a storage system including the same, and an operating method thereof.

### Description of Related Art

Semiconductor memory may be divided into volatile memory devices such as Static RAM (SRAM), Dynamic RAM (DRAM), and Synchronous DRAM (SDRAM), which lose stored data when power is cut off, and non-volatile memory devices such as Read Only Memory (ROM), Programmable ROM (PROM), Electrically Programmable ROM (EPROM), Electrically Erasable and Programmable ROM (EEPROM), flash memory devices, Phase-change RAM (PRAM), Magnetic RAM (MRAM), Resistive RAM (RRAM), and Ferroelectric RAM (FRAM), which retain stored data even when power is cut off.

### SUMMARY

The present disclosure relates to a storage controller for reducing latency that may occur due to map loading for converting a logical address into a physical address, a storage device including the same, and a storage system.

The problems to be solved by the present disclosure are not limited to those described above, and other problems not mentioned may be clearly understood by those skilled in the art from the description of the disclosure below.

According to some aspects, a storage system may include a host device including a command queue configured to queue commands, a non-volatile memory device configured to store a map information data set for converting a logical address into a physical address, a storage controller configured to store a mapping table set in a volatile memory based on the map information data set, in which the host device may be configured to transmit a first logical address range, which is associated with a first command to be queued in the command queue of the host device, to the storage controller, and the storage controller may be configured to receive the first logical address range and to store a first mapping table, which is associated with first map information data corresponding to the first logical address range among the map information data set, in the volatile memory.

According to some aspects, a storage device may include a non-volatile memory device configured to store a map information data set for converting a logical address into a physical address, and a storage controller configured to store a mapping table set in a volatile memory based on the map information data set, in which the storage controller may be configured to receive a first logical address range associated with a first command to be queued in a command queue of a host device, and store a first mapping table, which is associated with first map information data corresponding to the first logical address range among the map information data set, in the volatile memory.

According to some aspects, a method of operating a storage system including a host device including a command queue configured to queue commands, a non-volatile memory device configured to store a map information data set for converting a logical address into a physical address, and a storage controller configured to store a mapping table set in a volatile memory based on the map information data set, may include transmitting, by the host device, a first logical address range associated with a first command to be queued in the command queue, to the storage controller, receiving, by the storage controller, the first logical address range from the host device, and storing, by the storage controller, a first mapping table associated with first map information data corresponding to the first logical address range among the map information data set, in the volatile memory.

According to various embodiments of the present disclosure, by loading a mapping table corresponding to a logical address associated with a command into a volatile memory in advance before the command is fetched, a latency that may occur due to map loading may be minimized.

According to various embodiments of the present disclosure, if a mapping table corresponding to one or more logical addresses in a logical address list is already stored in a volatile memory, unnecessary overwriting may be prevented by excluding the mapping table from the victim data.

According to various embodiments of the present disclosure, it is possible to prevent a problem in which a mapping table corresponding to a high priority logical address is overwritten.

According to various embodiments of the present disclosure, by determining victim data based on information associated with at least one mapping table on which a flush operation is to be performed, unnecessary resource consumption required to perform a flush operation before overwriting the victim data may be minimized.

The effects that may be obtained through the present disclosure are not limited to those described above. Any technical effects not mentioned will be clearly understood by those skilled in the art from the description of the disclosure set forth below.

### BRIEF DESCRIPTION OF THE DRAWINGS

The above and other embodiments and features of the present disclosure will become more apparent by describing in detail example embodiments thereof with reference to the attached drawings, in which:
FIG. 1 is a diagram illustrating a storage system according to one embodiment of the present disclosure;
FIG. 2 is a diagram illustrating a non-volatile memory according to one embodiment of the present disclosure;
FIG. 3 is a perspective view illustrating a memory block according to one embodiment of the present disclosure;
FIG. 4 is a circuit diagram showing a memory block according to one embodiment of the present disclosure;
FIG. 5A is a diagram showing a detailed configuration of a storage system according to one embodiment of the present disclosure;
FIG. 5B is a drawing showing a detailed configuration of a storage system according to another embodiment of the present disclosure;
FIG. 6 is a flowchart illustrating an operation method of a storage system according to one embodiment of the present disclosure;
FIG. 7A is a diagram illustrating an example of a map hint command of step S610 of FIG. 6 according to one embodiment of the present disclosure;
FIG. 7B is a diagram showing an example of a map hint command of step S610 of FIG. 6 according to another embodiment of the present disclosure;
FIG. 8A is a drawing for explaining steps S620 and S630 of FIG. 6 according to one embodiment of the present disclosure;
FIG. 8B is a drawing for explaining steps S620 and S630 of FIG. 6 according to another embodiment of the present disclosure;
FIG. 9 is a drawing for explaining steps S640 and S650 of FIG. 6 according to one embodiment of the present disclosure;
FIG. 10 is a flowchart detailing step S650 of FIG. 6 according to one embodiment of the present disclosure;
FIG. 11A and FIG. 11B are diagrams for explaining a process in which victim data is determined and overwritten;
FIG. 12 is a drawing for explaining steps S660 and S670 of FIG. 6 according to one embodiment of the present disclosure;
FIG. 13 is a drawing illustrating step S680 of FIG. 6 in detail according to one embodiment of the present disclosure; and
FIG. 14 is a drawing for explaining step S690 of FIG. 6 according to one embodiment of the present disclosure.

### DETAILED DESCRIPTION

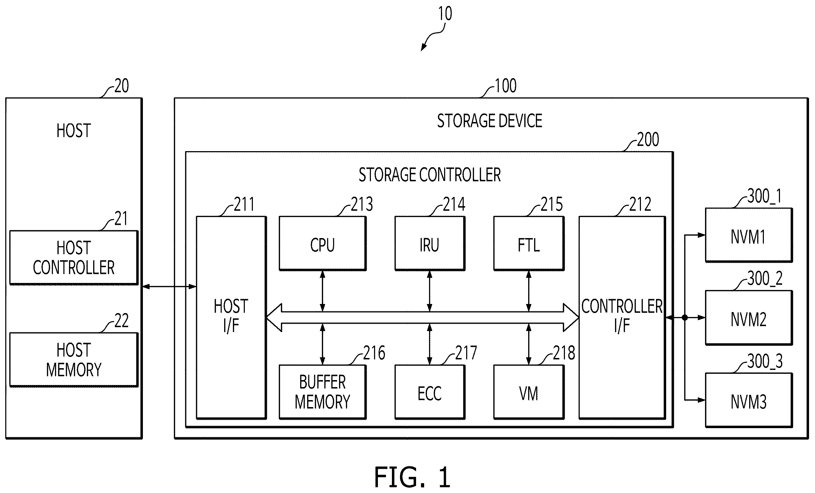

Hereinafter, various embodiments of the present disclosure will be described with reference to FIGS. 1 to 14. Throughout the specification, the same reference numerals may refer to the same components.

FIG. 1 is a drawing showing a storage system 10 according to one embodiment of the present disclosure. Referring to FIG. 1, a storage system 10 may include a host device 20 and a storage device 100. The host device 20 and the storage device 100 may transmit and receive data and/or signals to and from each other.

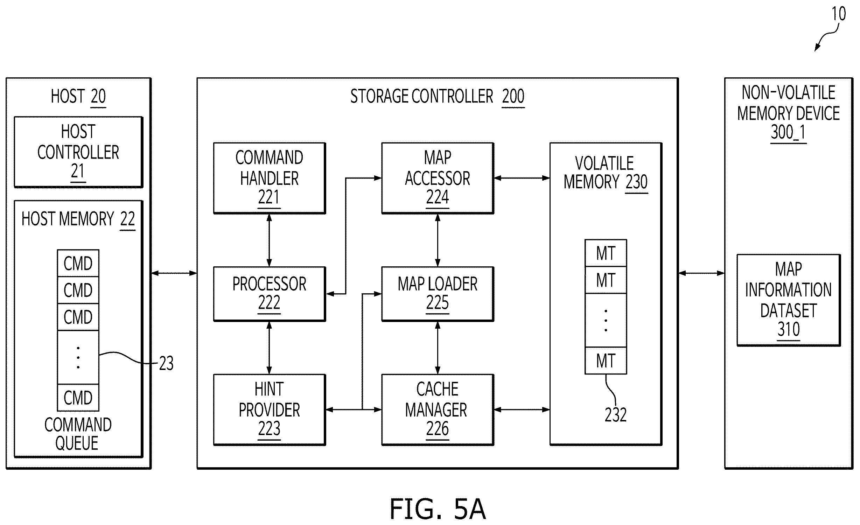

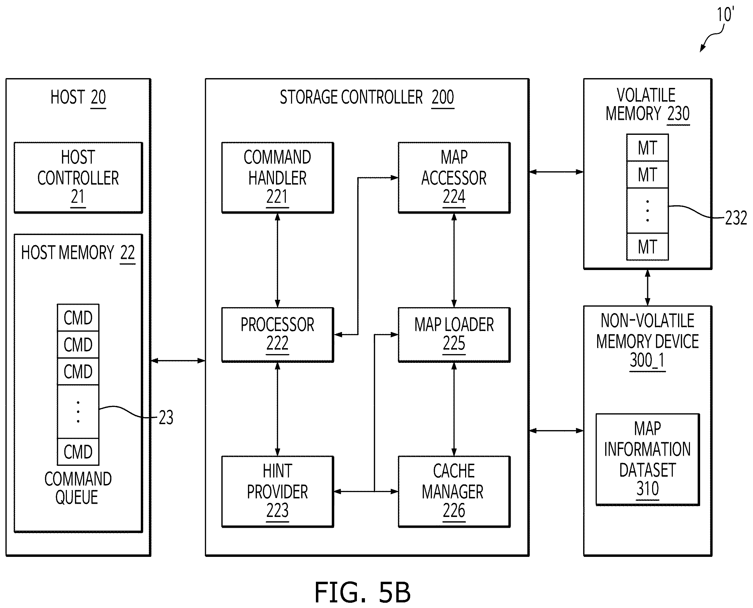

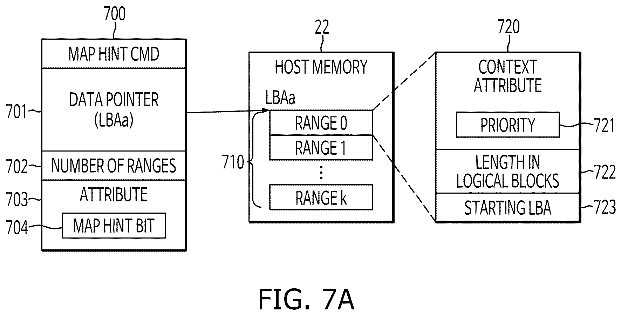

The host device 20 may include a host controller 21 and a host memory 22. The host memory 22 may function as a buffer memory for temporarily storing data to be transmitted to the storage device 100 or data transmitted from the storage device 100. The host memory 22 may include a command queue, which will be described later with reference to FIGS. 5A and 5B, etc. The host memory 22 may store address range list data, which will be described later with reference to FIG. 7A.

According to one embodiment, the host controller 21 and host memory 22 may be implemented as separate semiconductor chips. Alternatively, in some embodiments, the host controller 21 and the host memory 22 may be integrated into the same semiconductor chip. As an example, the host controller 21 may be one of a plurality of modules provided in an application processor, and the application processor may be implemented as a system on chip (SoC). Additionally, the host memory 22 may be an embedded memory provided within the application processor, or a volatile memory or a memory module disposed outside the application processor.

In one embodiment, the host controller 21 may manage an operation of storing data from the host memory 22 in non-volatile memory devices 300_1, 300_2 and 300_3 through the storage controller 200, or storing data from the memory devices 300_1, 300_2 and 300_3 in the host memory 22 through the storage controller 200.

The host controller 21 may generate commands (e.g., dataset management commands, read commands, write commands, TRIM commands, etc.) to be executed in the storage device 100, and store (e.g., queue) them in the host memory 22 (e.g., command queue in the host memory 22).

The storage device 100 may include a storage controller 200 and a plurality of non-volatile memory devices (NVMs) 300_1, 300_2 and 300_3. The storage controller 200 and each of the plurality of non-volatile memory devices 300_1, 300_2 and 300_3 may transmit and receive data or signals, etc., to and from each other. Although three non-volatile memory devices 300_1, 300_2 and 300_3 are illustrated in FIG. 1, the present disclosure is not limited thereto, and any number of memory devices may be included in the storage device 100. For example, the storage device 100 may include a plurality of memory devices connected and arranged in an array form.

The storage device 100 may include a storage medium for storing data upon request from a host device 20. As an example, the storage device 100 may include at least one of a solid state drive (SSD), an embedded memory, and a removable external memory. If the storage device 100 is an SSD, the storage device 100 may be a device that follows the non-volatile memory express (NVMe) standard. If the storage device 100 is an embedded memory or an external memory, the storage device 100 may be a device that follows the universal flash storage (UFS) or embedded multi-media card (eMMC) standard. The host device 20 and the storage device 100 may each generate packets according to the adopted standard protocol and transmit them.

When the non-volatile memory devices 300_1, 300_2 and 300_3 include flash memory, the flash memory may include a 2D NAND memory array or a 3D (or vertical or bonding vertical) NAND (VNAND) memory array. As another example, the storage device 100 may include various other types of non-volatile memory and/or volatile memory. For example, the storage device 100 may include at least one of volatile or non-volatile memories, such as static RAM (SRAM), dynamic RAM (DRAM), synchronous DRAM (SDRAM), read only memory (ROM), programmable ROM (PROM), electrically programmable ROM (EPROM), electrically erasable and programmable ROM (EEPROM), magnetic RAM (MRAM), spin-transfer torque MRAM, conductive bridging RAM (CBRAM), ferroelectric RAM (FeRAM), phase RAM (PRAM), and resistive RAM. At least some of the plurality of non-volatile memory devices 300_1, 300_2 and 300_3 may alternatively be volatile memory devices.

The storage controller 200 may include a host interface 211, a controller interface circuit 212, and a central processing unit (CPU) 213. Additionally, the storage controller 200 may further include an index read unit (IRU) 214, a flash translation layer (FTL) 215, a buffer memory 216, an error correction code (ECC) 217 engine, and an internal volatile memory 218. The storage controller 200 may further include a working memory into which a flash translation layer 215 is loaded, and data write and read operations for non-volatile memory may be controlled by the CPU 213 executing the flash translation layer 215.

The host interface 211 may transmit and receive packets to and from the host device 20. A packet transmitted from a host device 20 to a host interface 211 may include a command and/or data to be written to or transmitted to non-volatile memory devices 300_1, 300_2 and 300_3, and a packet transmitted from the host interface 211 to the host device 20 may include a response to a command, data which is read from non-volatile memory devices 300_1, 300_2 and 300_3, and the like. The host interface 211 is illustrated as being included in the storage controller 200, but the embodiment is not limited to this example. For example, the host interface 211 may be located outside the storage controller 200.

The controller interface circuit 212 may transmit data to be written to non-volatile memory devices 300_1, 300_2 and 300_3 to the non-volatile memory devices 300_1, 300_2 and 300_3 or receive data which is read from the non-volatile memory devices 300_1, 300_2 and 300_3. The controller interface circuit 212 may be implemented to comply with standard protocols such as toggle or ONFI.

The flash translation layer 215 may perform various functions such as address mapping, wear-leveling, and garbage collection. For example, the flash translation layer 215 may obtain a physical address corresponding to a logical address from a logical address. Additionally, the buffer memory 216 may temporarily store data to be written to the memory devices 300_1, 300_2 and 300_3 or data which is read from the non-volatile memory devices 300_1, 300_2 and 300_3. The buffer memory 216 may be configured to be provided within the storage controller 200, but may also be placed outside the storage controller 200.

The ECC engine 217 may perform error detection and correction functions for read data which is read from non-volatile memory devices 300_1, 300_2 and 300_3. More specifically, the ECC engine 217 may generate a parity bit for write data to be written to the non-volatile memory devices 300_1, 300_2 and 300_3, and the parity bit generated in this way may be stored in the non-volatile memory devices 300_1, 300_2 and 300_3 together with the write data. When reading data from the non-volatile memory devices 300_1, 300_2 and 300_3, the ECC engine 217 may correct errors in the read data using parity bits which are read from the non-volatile memory devices 300_1, 300_2 and 300_3 together with the read data, and may output the read data with the errors corrected.

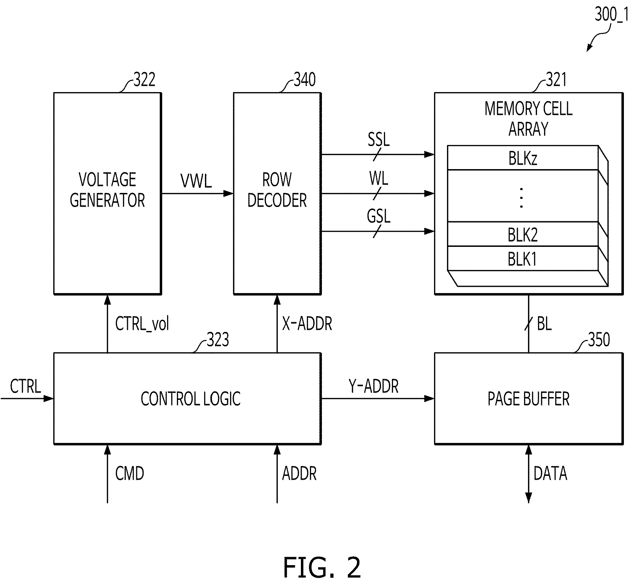

FIG. 2 is a diagram illustrating a non-volatile memory according to one embodiment of the present disclosure. Although each of the components of FIG. 2 is illustrated and described as being included in one non-volatile memory device 300_1 of FIG. 1, it should be understood that the embodiments described with reference to FIG. 2 may be applied to any non-volatile memory device connected to the storage controller 200 of FIG. 1.

Referring to FIG. 2, the non-volatile memory device 300_1 may include a memory cell array 321, a voltage generator 322, a control logic circuit 323, a row decoder 340, and a page buffer circuit 350. In another embodiment, the non-volatile memory device 300_1 may further include a data input/output circuit or an input/output interface.

The memory cell array 321 includes a plurality of memory cells and may be connected to word lines (WL), string select lines (SSL), ground select lines (GSL), and a plurality of bit lines (BL). Specifically, the memory cell array 321 may be connected to a row decoder 340 through word lines WL, string select lines SSL, and ground select lines GSL, and may be connected to a page buffer circuit 350 through a plurality of bit lines BL.

The memory cell array 321 may include a plurality of memory blocks BLK1 to BLKz. Each of the plurality of memory blocks BLK1 to BLKz may include a plurality of pages in which memory cells are connected. Each word line WL may be associated with one or more pages.

Each of the plurality of memory blocks BLK1 to BLKz may have a three-dimensional structure or vertical structure. Specifically, each memory block includes structures extending along the first to third directions. For example, each memory block includes a plurality of NAND strings extending along a third direction. At this time, the plurality of NAND strings may be provided spaced apart by a specific distance along the first and second directions.

The plurality of memory blocks BLK1 to BLKz may be selected by the row decoder 340. For example, the row decoder 340 may select a memory block corresponding to a block address among the plurality of memory blocks BLK1 to BLKz.

Each of the plurality of memory blocks BLK1 to BLKz may correspond to a specific logic block accessed by a storage controller (e.g., 200 in FIG. 1). For example, one logic block may correspond to at least one physical memory block among the plurality of memory blocks BLK1 to BLKz. The flash translation layer of the storage controller (e.g., 215 in FIG. 1) may manage the mapping relationship between logic blocks and a plurality of memory blocks BLK1 to BLKz, and may access the plurality of memory blocks BLK1 to BLKz using the logic blocks.

Each of the memory cells included in the memory cell array 321 may store at least one bit. In one embodiment, the memory cell may be a single level cell (SLC) which stores one bit of data. In one embodiment, the memory cell may be a multi-level cell (MLC) that stores more than two bits of data, such as a MLC (or a double level cell) that stores two bits of data, a triple level cell (TLC) that stores three bits of data, or a quadruple level cell (QLC) that stores four bits of data. However, the present disclosure is not limited thereto.

When an erase voltage is applied to the memory cell array 321, a plurality of memory cells are put into an erased state, and when a program voltage is applied to the memory cell array 321, a plurality of memory cells may be put into a program state. At this time, each memory cell may have an erased state or at least one program state distinguished by a threshold voltage. That is, the states of the memory cell may include an erased state and at least one program state, and a specific state of each memory cell may be an erased state or one of at least one program state.

The control logic circuit 323 may generally control various operations within the non-volatile memory device 300_1. For example, the control logic circuit 323 may output various control signals for writing data to the memory cell array 321 or reading data from the memory cell array 321, based on a command CMD, an address ADDR, and a control signal CTRL. The control logic circuit 323 may control a plurality of program operations to be performed for a plurality of pages.

Various control signals, which are output from the control logic circuit 323, may be provided to a voltage generator 322, a row decoder 340, and a page buffer circuit 350. For example, the control logic circuit 323 may provide a voltage control signal CTRL_vol to the voltage generator 322.

The voltage generator 322 may be connected to the memory cell array 321 through a plurality of word lines WL. The voltage generator 322 may generate various types of voltages for performing a program operation, a read operation, and/or an erase operation on the memory cell array 321 based on a voltage control signal CTRL_vol. The voltage generator 322 may generate word line voltages VWL, for example, a program voltage, a verify voltage, a read voltage, an erase voltage, etc.

The program voltage, verify voltage, read voltage, erase voltage, etc. generated by the voltage generator 322 may be provided to a selected word line among a plurality of word lines WL. The selected word line may be at least one word line selected by a row address X-ADDR. Each of the plurality of word lines **WL** includes a plurality of pages, and program operations, verification operations, read operations, etc., which are performed by voltages generated by the voltage generator 322, may be performed on a page basis. For example, a program voltage (or pulse) and a verify voltage (or pulse) may be applied to a selected page within a selected word line, thereby performing program and verification operations on the selected page.

During an erase operation, the voltage generator 322 may apply an erase voltage to the well and/or common source line of the memory block. Further, the voltage generator 322 may apply an erase allowable voltage (e.g., ground voltage) to all word lines **WL** of the memory block or word lines corresponding to some sub-blocks based on the erase address. During an erase verification operation, the voltage generator 322 may apply an erase verify voltage to all word lines WL of one memory block or apply an erase verify voltage per word line.

During a program operation, the voltage generator 322 may apply a program voltage to a selected word line among a plurality of word lines WL and apply a program pass voltage to unselected word lines among a plurality of word lines WL. Additionally, during a program verification operation, the voltage generator 322 may apply a program verification voltage to selected word lines and apply a verification pass voltage to unselected word lines.

During a normal read operation, the voltage generator 322 may apply a read voltage to a selected word line and apply a read pass voltage to unselected word lines.

During a data recovery read operation, the voltage generator 322 may apply a read pass voltage to a selected word line and apply a read voltage to at least one word line adjacent to the selected word line. Alternatively, the voltage generator 322 may apply a read voltage to the selected word line and apply a read pass voltage to at least one word line adjacent to the selected word line.

The row decoder 340 may select a specific word line among the word lines WL in response to a row address X-ADDR received from the control logic circuit 323. Specifically, during program operation, the row decoder 340 may provide a program voltage to a selected word line. Additionally, the row decoder 340 may select some of the string select lines SSL or some of the ground select lines GSL in response to the row address X-ADDR received from the control logic circuit 323.

The page buffer circuit 350 may be connected to the memory cell array 321 through a plurality of bit lines BL. The page buffer circuit 350 may select some bit lines among a plurality of bit lines BL in response to a column address Y-ADDR received from the control logic circuit 323. During a verification operation (e.g., an erase verification operation or a program verification operation) or a read operation, the page buffer circuit 350 may act as a sense amplifier to sense data stored in a selected memory cell through a selected bit line. Meanwhile, when the program is operating, the page buffer circuit 350 may operate as a write driver to input data to be stored in the memory cell array 321. The page buffer circuit 350 may include a plurality of page buffers. In this case, each page buffer may be connected to at least one bit line.

The page buffer circuit 350 may store data which is read from the memory cell array 321 or data to be stored in the memory cell array 321.

The page buffer circuit 350 may include a plurality of page buffers each connected to a plurality of bit lines BL. The plurality of page buffers may be arranged to correspond to each bit line, and each page buffer may include a plurality of latches. Hereinafter, the page buffer circuit 350 will be defined as including a page buffer connected to each bit line. However, embodiments of the present disclosure may define the term differently, and as an example, a unit of configuration, in which one page buffer is provided to correspond to a plurality of bit lines and is arranged to correspond to each bit line, may be defined as a page buffer unit. The page buffer circuit 350 may temporarily store data to be programmed into a selected page during a program operation and temporarily store data read from a selected page during a read operation.

A control logic circuit 323, a voltage generator 322, a row decoder 340, and a page buffer circuit 350 may be included in the peripheral circuit.

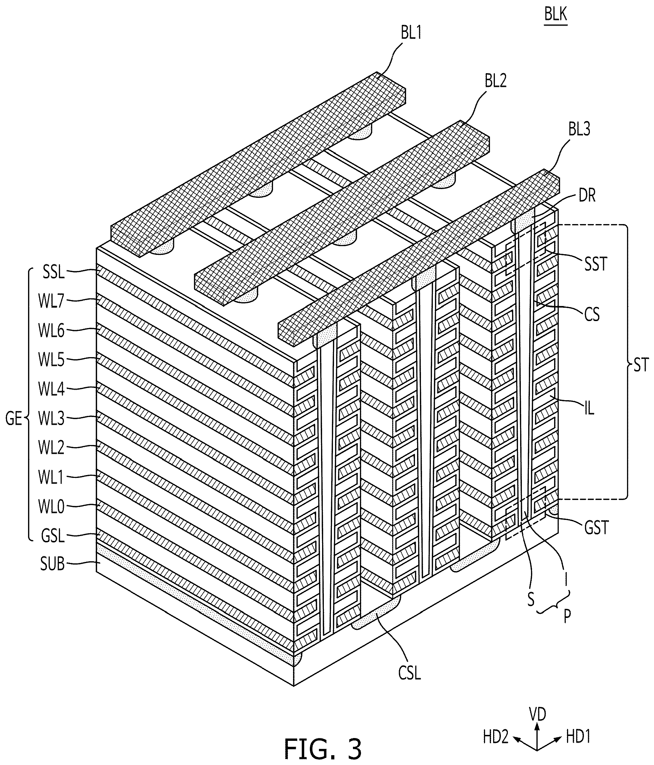

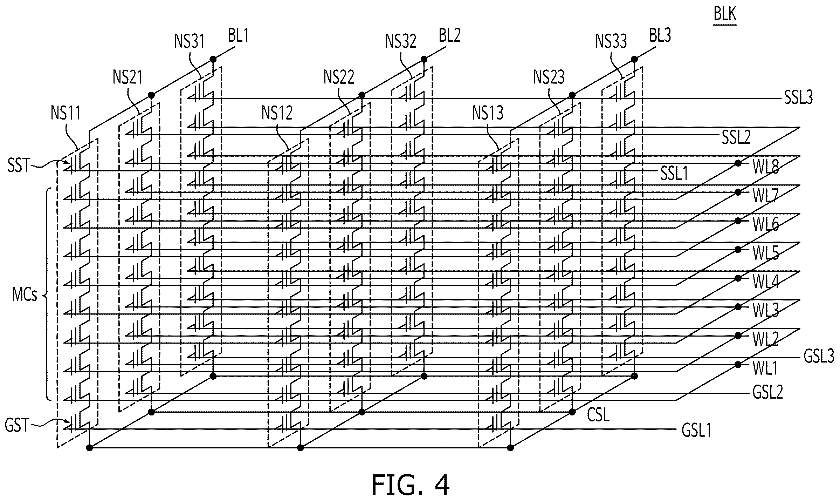

FIG. 3 is a perspective view showing a memory block according to one embodiment of the present disclosure, and FIG. 4 is a circuit diagram showing a memory block according to one embodiment of the present disclosure.

Referring to FIG. 3, a memory block BLK may include a stack ST extending vertically VD on the upper portion of a substrate SUB. For example, a memory block BLK may include a single stack ST between the substrate SUB and bit lines BL1, BL2 and BL3. A common source line CSL may be arranged on a substrate SUB, and insulating films IL extending along a second horizontal direction HD2 are sequentially provided along a vertical direction VD on an area of the substrate SUB between two adjacent common source lines CSL, and the insulating films IL may be spaced apart by a specific distance along the vertical direction VD. Pillars P, which penetrate the insulating films IL along the vertical direction VD are provided on the region of the substrate SUB between two adjacent common source lines CSL. A pillar may be referred to as a channel hole. The pillars P may be formed in a cup shape (or a cylinder shape with a closed bottom) extending in the vertical direction VD. The surface layer S of each of the pillars P may include a silicon material having a first type and may function as a channel region. Meanwhile, the inner layer I of each of the pillars P may include an insulating material such as silicon oxide, or an air gap.

In the region between two adjacent common source lines CSL, a charge storage layer CS is provided along the exposed surfaces of the insulating films IL, pillars P and substrate SUB. The charge storage layer CS may include a gate insulating layer, a charge trap layer, and a blocking insulating layer. For example, the charge storage layer CS may have an oxide-nitride-oxide (ONO) structure. Additionally, gate electrodes GE, such as select lines GSL and SSL and word lines WL1 to WL8, may be provided on the exposed surface of the charge storage layer CS in the region between two adjacent common source lines CSL. Drains DR may be provided on each of the plurality of pillars P. Bit lines BL1, BL2 and BL3, which extend in the first horizontal direction HD1 and are spaced apart by a specific distance along the second horizontal direction HD2, are provided on the drains DR.

Referring to FIG. 4, a memory block BLK includes NAND strings NS11 to NS33, and each NAND string (e.g., NS11) may include a string select transistor SST, a plurality of memory cells MCs and a ground select transistor GST connected in series. Transistors SST and GST and memory cells MCs included in each NAND string may form a structure stacked along the vertical direction on the substrate.

The bit lines BL1, BL2 and BL3 may extend along the first direction, and the word lines WL1 to WL8 may extend along the second direction. NAND strings NS11, NS21 and NS31 may be positioned between a first bit line BL1 and a common source line CSL, NAND strings NS12, NS22 and NS32 may be positioned between a second bit line BL2 and the common source line CSL, and NAND strings NS13, NS23 and NS33 may be positioned between a third bit line BL3 and the common source line CSL.

The string select transistor SST may be connected to the corresponding string select lines SSL1, SSL2 and SSL3. Memory cells MCs may be respectively connected to corresponding word lines WL1 to WL8. The ground select transistor GST may be connected to the corresponding ground select lines GSL1, GSL2 and GSL3. The string select transistor SST may be connected to a corresponding bit line, and the ground select transistor GST may be connected to the common source line CSL. Here, the number of NAND strings, the number of word lines, the number of bit lines, the number of ground select lines, and the number of string select lines may vary depending on the embodiment.

FIG. 5A is a drawing showing a detailed configuration of a storage system 10 according to one embodiment of the present disclosure, and FIG. 5B is a drawing showing a detailed configuration of a storage system 10' according to another embodiment of the present disclosure. The arrows shown in FIGS. 5A and 5B are exemplary, and each component within the storage controller 200 may transmit and receive data or signals to and from each other.

The host memory 22 may include a command queue 23. The host memory 22 may store and manage various types of commands in the form of a command queue 23. At least some of the commands stored in the command queue 23 may be, but are not limited to, a read command, a write command, or a TRIM command.

The commands stored in the command queue 23 may include a map hint command. The map hint command may be a command that provides information associated with another command (e.g., a read command, a write command, and/or a TRIM command) to be executed in the storage controller 200 and/or the non-volatile memory device 300_1. For example, a map hint command may include information associated with the logical address to be accessed by another command (e.g., the starting block logical address and the number of logical blocks). In one example, a map hint command might be a dataset management (DSM) command. This will be described in detail later with reference to FIGS. 7a to 8b, etc.

The command queue 23 included in the host memory 22 may be implemented in various forms, such as a single queue, a multi-queue including a plurality of queues, a priority queue, a circular queue, etc., and the embodiment is not limited to these examples. The command queue 23 of the host memory 22 may be located in a shared memory area accessible to a storage device (e.g., a storage controller 200 of the storage device).

The host controller 21 may queue commands to be executed/processed in the storage device into the command queue 23 of the host memory 22. The host controller 21 may notify the storage controller 200 that a new command has been added to the command queue 23. For example, the host controller 21 may notify the storage controller 200 that a new command has been added to the command queue 23 by transmitting an interrupt signal or the like to the storage controller 200.

The host controller 21 may re-order commands stored in the command queue 23. For example, the order in which commands stored in the command queue 23 are executed or processed may not match the order in which they are stored in the command queue 23.

A non-volatile memory device 300_1 may store a map information data set 310 for converting a logical address into a physical address. Similarly, the volatile memory 230 may store a mapping table set 232 for converting logical addresses into physical addresses. The mapping table set 232 stored in the volatile memory 230 may be loaded/stored by the storage controller 200.

The storage controller 200 may store a mapping table set 232 in the volatile memory 230 based on a map information data set 310. The storage controller 200 may store/load a mapping table corresponding to at least a part of the map information data set 310 into the volatile memory 230. The storage controller 200 may store/load a mapping table associated with at least a portion of the map information data set 310 into the volatile memory 230, based on a logical address associated with a command received from the host device 20 and/or a command queued in a command queue of the host device 20.

In one example, the storage controller 200 may receive at least a portion of a map information data set 310 from a non-volatile memory device 300_1, generate a mapping table based on at least a portion of the received map information data set 310, and load/store the mapping table into a volatile memory 230. In another example, the storage controller 200 may request the non-volatile memory device 300_1 to load/store at least a portion of the map information data set 310 into the volatile memory 230, and the non-volatile memory device 300_1 may load/store a mapping table corresponding to at least a portion of the map information data set 310 into the volatile memory 230 in response to the request of the storage controller 200.

The mapping table set 232 may include a plurality of mapping tables. Each of the plurality of mapping tables may include a correspondence relationship between a logical address used by the storage controller 200 to access the non-volatile memory device 300_1, and a physical address of the non-volatile memory device 300_1 corresponding to the logical address. For example, each of the plurality of mapping tables may include a plurality of logical addresses and a plurality of physical addresses corresponding to the plurality of logical addresses. The size of the mapping table or the number of logical addresses the mapping table contains may be set arbitrarily.

A mapping table set 232 may be generated/stored based on a map information data set 310 stored in a non-volatile memory device 300_1. For example, the map information data set 310 includes map information data for converting a logical address into a physical address, and a plurality of mapping tables may be respectively generated based on a portion of the map information data set 310 and stored in the volatile memory 230.

In various embodiments of the present disclosure, the map information data set 310 may include a plurality of logical addresses corresponding to the total number of logic blocks, and a plurality of physical addresses corresponding thereto. A logic block may be a logical block that serves as the basic unit of data input/output, for example, the smallest addressing unit used by an operating system or file system to manage storage space and read or write data. That is, the map information data set 310 may include all logical addresses used by the storage controller 200 to access the non-volatile memory device 300_1, and physical addresses corresponding to all logical addresses.

In various embodiments of the present disclosure, the size of the mapping table set 232 may be smaller than the size of the map information data set 310. That is, a specific mapping table corresponding to a logical address used by the storage controller 200 to access the non-volatile memory device 300_1 may not be loaded/stored in the volatile memory 230 depending on the situation. Therefore, in order to solve this problem, various embodiments of pre-loading/storing a mapping table corresponding to the logical addresses to be referenced by the commands to be fetched into a volatile memory 230 are described in detail below.

The storage controller 200 may include a command handler 221, a processor 222, a hint provider 223, a map accessor 224, a map loader 225, and a cache manager 226.

Referring to FIG. 5A, the storage controller 200 of the storage system 10 may further include a volatile memory 230. The volatile memory 230 may correspond to the internal volatile memory 218 of FIG. 1.

Referring to FIG. 5B, the volatile memory 230 of the storage system 10' may be connected to the storage controller 200 and the non-volatile memory device 300_1 from outside the storage controller 200.

In one example, the volatile memory 230 of FIGS. 5A and 5B may be, but is not limited to, DRAM.

In one example, the command handler 221 and the hint provider 223 may be included in the host interface circuit (e.g., 211 of FIG. 1) of the storage controller 200. In one example, a map accessor 224, a map loader 225, and a cache manager 226 may be included in a flash translation layer (e.g., 215 of FIG. 1). In one example, the processor 222 may correspond to the CPU 213 of FIG. 1. The processor 222 may include one or more processors.

The command handler 221, the processor 222, the hint provider 223, the map accessor 224, the map loader 225, and the cache manager 226 may include a processing circuit or be implemented as a processing circuit. The processing circuit may include a combination of hardware and software, such as hardware including logic circuitry, a processor executing software, or a combination thereof. For example, the processing circuit may include, but is not limited to, a central processing unit CPU, an arithmetic logic unit ALU, a digital signal processor DSP, a microcomputer, a field-programmable gate array FPGA, a system on chip SoC, a programmable logic device PLD, a microprocessor, an application-specific integrated circuit ASIC, etc.

The command handler 221 may check whether a new command is stored in the command queue 23 by receiving a signal from the host controller 21 or by periodically accessing the command queue 23.

The command handler 221 may fetch a command queued in the command queue 23. The command handler 221 may sequentially fetch commands in the order they are queued in the command queue 23. Additionally or alternatively, the command handler may fetch commands based on the priorities of the commands queued in the command queue 23.

The command handler 221 may obtain information necessary for the storage controller 200 and/or the non-volatile memory device 300_1 to perform a specific operation associated with the command, such as a command code (opcode), a command identifier CID, a logical block address LBA (e.g., a logical address in host memory and/or a logical address in the non-volatile memory device 300_1), a start logical block address SLBA and a number of logical blocks NLB, a data length, flags and options, priority information (e.g., a priority level), and an error checking code, etc., by fetching the command.

The command handler 221 may transmit the fetched command to the processor 222. For example, a command handler 221 may pass at least some of the information, which is necessary to perform a particular action associated with the command, to the processor 222.

The processor 222 may process a command received from the command handler 221. For example, the processor 222 may perform a read operation, a write operation, or a page copy operation. The processor 222 may be implemented in hardware and/or software.

The processor 222 may obtain a logical address of a non-volatile memory device 300_1 associated with a command. The processor 222 may transmit the acquired logical address to the map accessor 224. The processor 222 may request the map accessor 224 for a physical address corresponding to the acquired logical address.

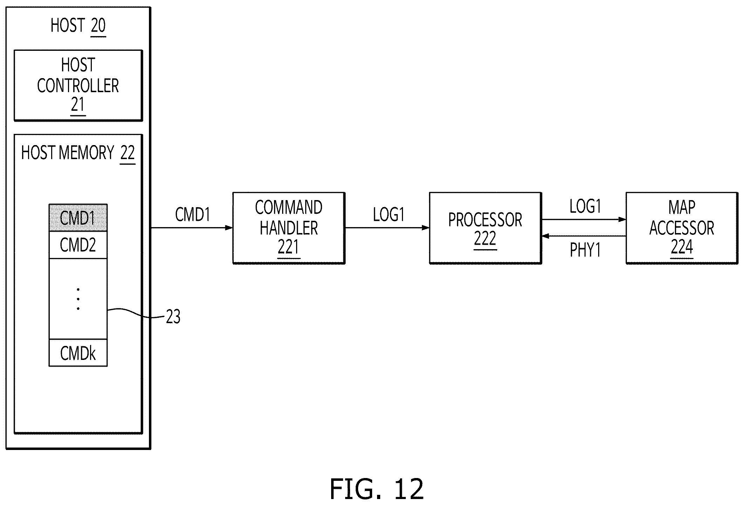

The operation of the command handler 221, the processor 222, and the map accessor 224 is described in detail later with reference to FIG. 12.

The command handler 221 may fetch a map hint command queued in a command queue 23 and pass it to the hint provider 223. For example, the hint provider 223 may obtain a map hint command queued in the command queue 23 while the command handler 221 is fetching a previous command or while the processor 222 is processing a previous command. The hint provider 223 may obtain a logical address or a logical address range associated with one or more other commands (e.g., subsequent commands) to be queued (or which were queued) in the command queue 23, based on the fetched map hint command. For example, the hint provider 223 may obtain a logical address of a non-volatile memory device 300_1 to be accessed during the processing of a subsequent command or a logical address range including such a logical address. The hint provider 223 may obtain the above-described logical address range by obtaining the start logical block address and the number of logical blocks associated with one or more other commands queued in the command queue 23.

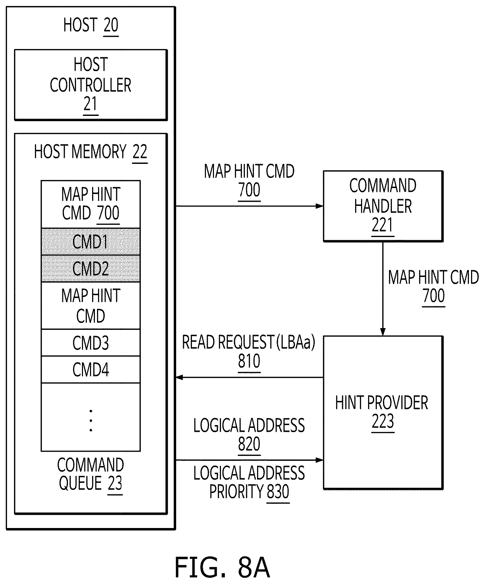

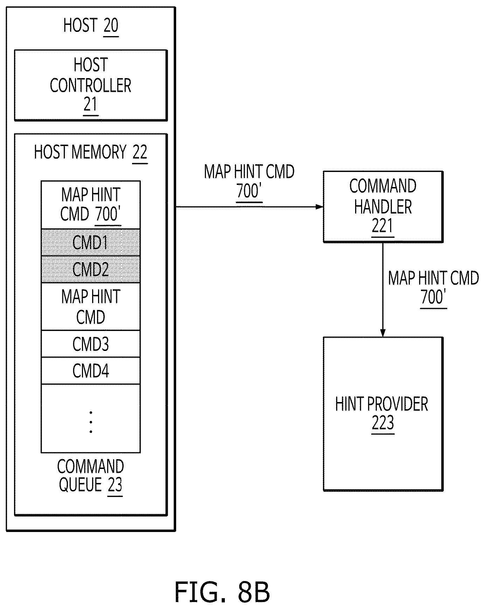

Additionally, the hint provider 223 may further obtain priority information (e.g., priority level) of the logical address range obtained based on the map hint command. The operation of the hint provider 223 associated with the map hint command is described in detail later with reference to FIGS. 8A and 8B.

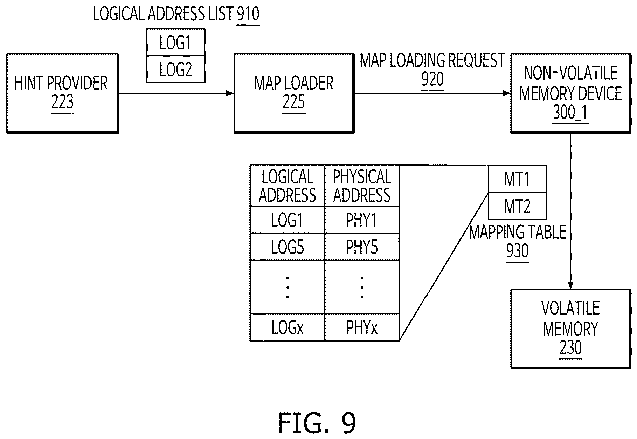

The hint provider 223 may transmit the acquired information to the map loader 225 and/or the cache manager 226. The hint provider 223 may send a request to the map loader 225 to load/store a mapping table corresponding to the acquired information into the volatile memory 230. The hint provider 223 may send a request to the cache manager 226 to select/decide the victim data to overwrite the mapping table. This will be described in detail later with reference to FIGS. 9 to 11 B.

The map accessor 224 may access the volatile memory 230 to obtain a mapping table. For example, the map accessor 224 may obtain a part of the mapping table set 232 loaded/stored in the volatile memory 230 from the volatile memory 230. The map accessor 224 may obtain a mapping table upon request from one or more processors 222.

The map accessor 224 may request the volatile memory 230 for a mapping table corresponding to a logical address (or logical address range) received from the processor 222. If a mapping table corresponding to the received logical address (or logical address range) is loaded/stored in a volatile memory 230, the map accessor 224 may obtain the corresponding mapping table and determine the physical address of the non-volatile memory device 300_1 corresponding to a specific logical address from the obtained mapping table. The map accessor 224 may transmit the determined physical address to the processor 222, and the processor 222 may process the command using the received physical address.

If a mapping table corresponding to a received logical address (or logical address range) is not loaded/stored in the volatile memory 230 (map miss occurs), the map accessor 224 may request the map loader 225 to load/store a mapping table corresponding to the received logical address (or logical address range) in the volatile memory 230.

The map loader 225 may transmit a loading request to the non-volatile memory device 300_1 in response to a request from the map accessor 224. In response to the map loader 225 transmitting a loading request to the non-volatile memory device 300_1, at least one mapping table corresponding to at least a portion of the map information data set 310 stored in the non-volatile memory device 300_1 may be loaded/stored into the volatile memory 230. In this case, there may be a hazard such as command execution being suspended for the time it takes for the mapping table to be loaded/stored in the volatile memory 230, and latency due to the loading/storing of the mapping table.

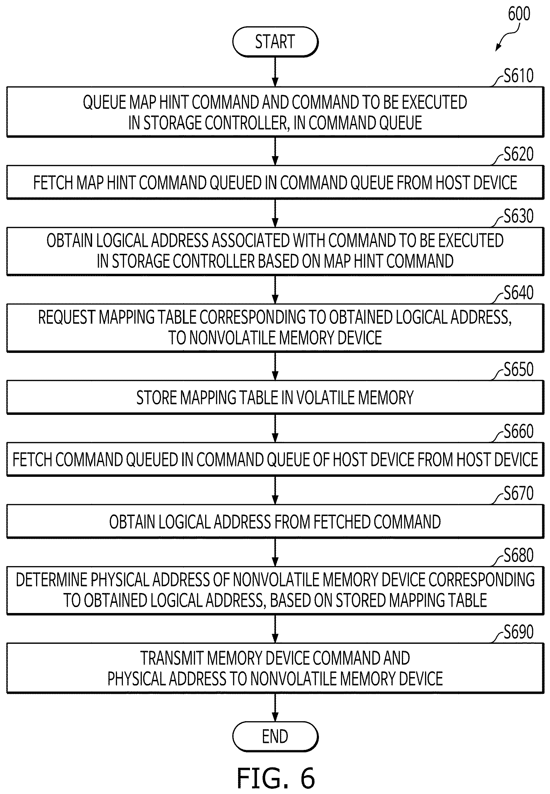

The map loader 225 may transmit a loading request to the non-volatile memory device 300_1 in response to a request from the hint provider 223. Through this, when a mapping table corresponding to a logical address (e.g., a logical address to be accessed by a subsequent command) received at the request of the processor 222 is not loaded into the volatile memory 230, the latency incurred for loading the mapping table into the volatile memory 230 may be reduced. This will be described in detail later with reference to FIGS. 6 to 9, etc.

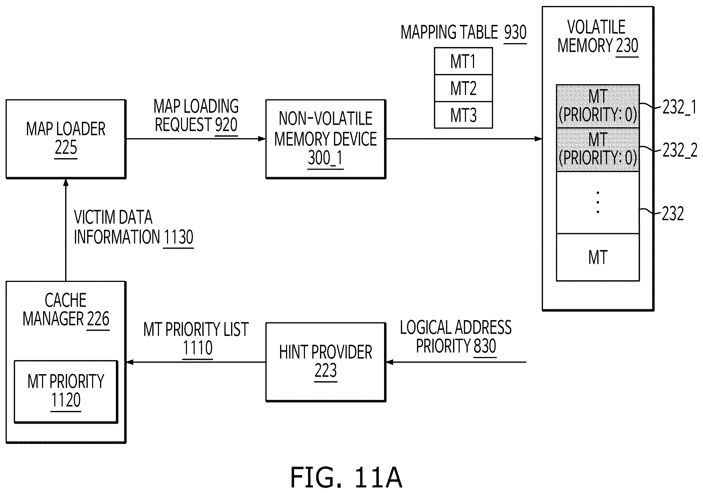

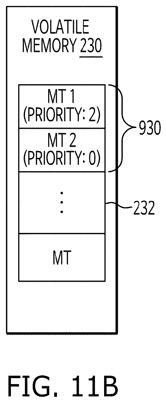

The cache manager 226 may determine the location within the volatile memory 230 to load/store the mapping table. For example, the cache manager 226 may determine victim data in the mapping table set 232 within the volatile memory 230. The cache manager 226 may transmit the location within the determined volatile memory 230 to the map loader 225. In response to receiving a location in the volatile memory 230 from the cache manager 226, the map loader 225 may store (e.g., overwrite) a mapping table corresponding to map information data received from the non-volatile memory device 300_1 at the received location, or control the non-volatile memory device 300_1 to store the mapping table at the received location. This will be described in detail later with reference to FIGS. 11A and 11B.

In one embodiment, the non-volatile memory device 300_1 of FIG. 5A may, in response to a request from the storage controller 200, transmit map information data corresponding to a specific logical address range among the map information data set 310 to the storage controller 200, and the storage controller 200 may load/store a mapping table corresponding to the map information data received from the non-volatile memory device 300_1 into the volatile memory 230.

In one embodiment, the non-volatile memory device 300_1 of FIG. 5B may load/store a mapping table into the volatile memory 230 using map information data corresponding to a specific logical address range among the map information data set 310 in response to a request from the storage controller 200.

FIG. 6 is a flowchart illustrating an operation method 600 of a storage system according to one embodiment of the present disclosure. The method of operating the storage system 600 may be performed by the storage system 10 of FIG. 5A or the storage system 10' of FIG. 5B.

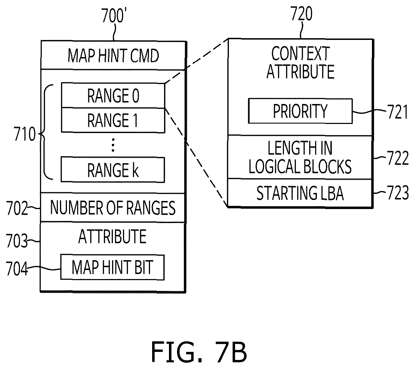

Referring to FIGS. 5A, 5B and 6 below, a host device 20 (e.g., host controller 21) may queue a map hint command and a command to be executed in a storage controller 200, to a command queue 23 (S610). The host device 20 may generate a map hint command based on information associated with one or more commands to be executed on the storage controller 200. For example, the host device 20 may generate a map hint command that includes information associated with a logical address (e.g., a starting block logical address and a number of logical blocks) to be accessed by one or more commands to be executed on the storage controller 200. An example of a map hint command generated by the host device 20 is described in detail below with reference to FIGS. 7A and 7B.

The storage controller 200 may fetch a map hint command queued in the command queue 23 from the host device S620. In one embodiment, a map hint command may be fetched from the host device prior to generation of a subsequent command associated with the map hint command or prior to the subsequent command being queued in the command queue 23.

The storage controller 200 may obtain a logical address or a logical address range (e.g., a starting block logical address and a number of logical blocks) associated with a command queued in a command queue of a host device (S630). This will be described in detail later with reference to FIGS. 8A and 8B.

Unlike the embodiments of steps S620 and S630 described above, the storage controller may obtain the logical address range associated with a command to be queued in the command queue of the host device in various ways. For example, the host device may transmit a map hint command containing information associated with the logical address range to the storage controller, transmit the logical address range to the storage controller using an out-of-band (OOB) channel, or transmit the logical address range to the storage controller by setting a peripheral component interconnect (PCI) register. This allows the storage controller to obtain a logical address range associated with a command to be queued in the command queue of the host device.

The storage controller 200 may request a mapping table corresponding to the logical address or logical address range acquired in step S630, to the non-volatile memory device 300_1 (S640). This will be described in detail later with reference to FIG. 9. Alternatively, the storage controller 200 may request map information data corresponding to the logical address or logical address range acquired in step S630, to the non-volatile memory device 300_1, and receive the same to generate a mapping table.

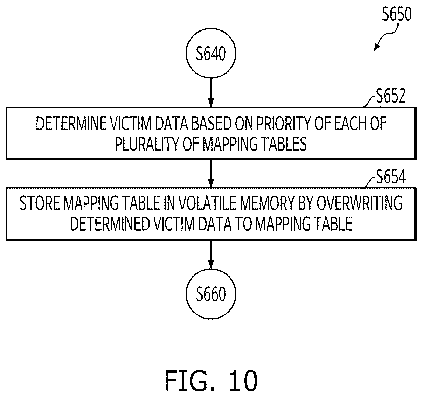

The non-volatile memory device 300_1 and/or the storage controller 200 may, in response to the request of step S640, load/store a mapping table associated with map information data corresponding to the logical address or logical address range acquired in step S630, into the volatile memory 230 (S650). This will be described in detail later with reference to FIGS. 10, 11A, and 11 B.

The storage controller 200 may fetch a command queued in the command queue 23 of the host device 20, from the host device 20 (S660). The storage controller 200 may obtain a logical address from the command fetched at step S660 (S670). This will be described in detail later with reference to FIG. 12.

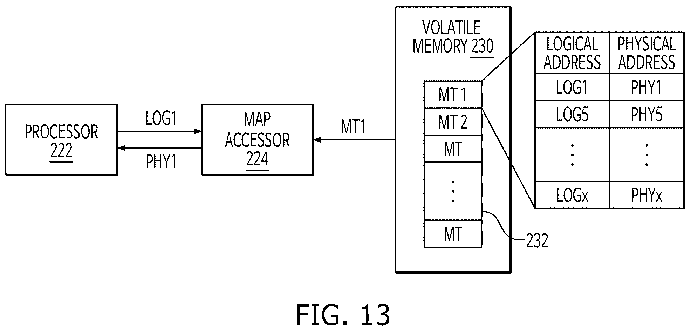

The storage controller 200 may determine the physical address of the non-volatile memory device 300_1 corresponding to the acquired logical address, based on the mapping table loaded/stored in step S650 (S680). This will be described in detail later with reference to FIG. 13.

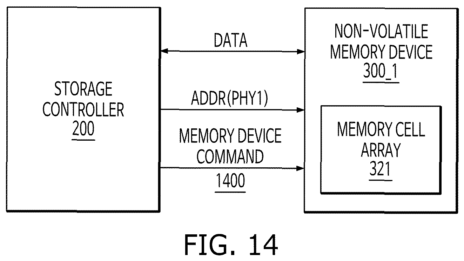

The storage controller 200 may perform an operation according to a command, based on the physical address determined in step S680 (S690). This will be described in detail later with reference to FIG. 14.

FIG. 7A is a diagram showing an example of a map hint command 700 of step S610 of FIG. 6 according to one embodiment of the present disclosure, and FIG. 7B is a diagram showing an example of a map hint command 700' of step S610 of FIG. 6 according to another embodiment of the present disclosure.

Referring to FIG. 7A, the map hint command 700 may include a data pointer 701, address range number information 702, and attribute information 703. The map hint command 700 may be a dataset management command.

The data pointer 701 may point to a logical block address LBAa of the host memory 22 where the address range list data 710 is stored. A data pointer 701 may indicate a logical block address for one or more address ranges of the address range list data 710. For example, a data pointer 701 may point to one or more logical block addresses for one or more address ranges associated with one or more commands (e.g., a read command, a write command, a trim command, etc.).

The address range number information 702 may indicate the number of address ranges indicated by the data pointer 701. For example, the address range number information 702 may include the number of logical block addresses LBAa indicated by the data pointer 701.

Attribute information 703 may indicate attributes of a map hint command 700. For example, the attribute information 703 may include a map hint bit 704 that indicates whether to store a mapping table associated with a logical address (e.g., a start logical block address 723 and a logical block number 722) stored in a logical block address LBAa indicated by the data pointer 701 in the volatile memory (e.g., 230 of FIGS. 5A and 5B). The map hint bit 704 may contain one or more bits.

The address range list data 710 stored in the host memory 22 may include information on a plurality of address ranges RANGE 0 to RANGE k (here, k is a natural number greater than or equal to 1). For example, information for each of a plurality of address ranges RANGE 0 to RANGE k may include a context attribute 720 and a logical address (e.g., the number of logical blocks 722 and the start logical block address 723).

The context attribute 720 may include priority information 721 of a logical address (e.g., the number of logical blocks 722 and the start logical block address 723). For example, the priority information 721 may include a priority level of a logical address range specified by the number of logical blocks 722 and a start logical block address 723 among a predetermined number of priority levels.

The priority information 721 may be expressed by any number of bits.

In one embodiment, the priority information 721 may be located in an existing data field within a context attribute 720 of a map hint command 700, which is a dataset management command. For example, the priority information 721 may be located in place of access latency AL information in a data field where access latency AL information is to be located. For example, the data field contains 2 bits, and the values "01", "10" and "11" within the data field may represent the lowest priority level, medium priority level, and highest priority level, respectively. The value "00" may indicate that no priority level is specified.

In one embodiment, priority information 721 may be located in the existing data field and/or a reserved field within the context attribute 720. For example, the priority information 721 may be located in a data field where access latency information is to be located, and in a reserved field. For example, the priority information 721 is expressed with 4 bits, so that 15 priority levels (e.g., "0001" to "1111" bits) and a state, in which no priority level is specified (e.g., "0000" bit), may be expressed.

The address range list data 710 stored in the host memory 22 may be updated by a host controller (e.g., 21 in FIG. 1) connected to the host memory 22. For example, the host controller may update priority information 721 in a logical address range.

Referring to FIG. 7B, unlike FIG. 7A, the map hint command 700' may include address range list data 710.

FIG. 8A is a drawing for explaining steps S620 and S630 of FIG. 6 according to one embodiment of the present disclosure, and FIG. 8B is a drawing for explaining steps S620 and S630 of FIG. 6 according to another embodiment of the present disclosure. FIG. 8A may be a drawing for explaining the operation of steps S620 and S630 using the map hint command 700 of FIG. 7A, and FIG. 8B may be a drawing for explaining the operation of steps S620 and S630 using the map hint command 700' of FIG. 7B.

Referring to FIG. 8A, a command handler 221 may fetch a map hint command 700 queued in a command queue 23 of a host memory 22 of a host device 20. The command handler 221 may pass the fetched map hint command 700 to the hint provider 223.

A map hint command 700 may be a command to provide one or more logical address ranges associated with one or more commands to a storage controller (e.g., 200 of FIGS. 5A and 5B). In one example, a map hint command 700 may point to one or more logical block addresses within the host memory 22 where logical addresses (or logical address ranges) associated with the first command CMD1 and the second command CMD2 are stored. The first command CMD1 and the second command CMD2 may be commands to be executed/processed by the storage controller in the following order of the map hint command 700. For example, after the map hint command 700 is processed by the storage controller, the second command CMD2 may be processed in the next order after the first command CMD1, and the map hint command and/or the third command CMD3 may be processed in the next order after the second command CMD2. Each of the first command CMD1 and the second command CMD2 may be, but is not limited to, a read command, a write command, or a trim command. The first command CMD1 and the second command CMD2 are illustrated as being queued together with the map hint command 700, but are not limited thereto, and the first command CMD1 and the second command CMD2 may be queued in the command queue 23 after the map hint command 700 is dequeued and processed in the storage controller.

A hint provider 223 may obtain one or more logical addresses 820 (or one or more logical address ranges including one or more logical addresses 820) associated with one or more commands queued in a command queue 23 based on a map hint command 700. For example, one or more logical addresses 820 obtained by the hint provider 223 may include, but are not limited to, a first logical address (or logical address range) associated with a first command CMD1, and a second logical address (or logical address range) associated with a second command CMD2, and may include any number of logical addresses or logical address ranges.

In one embodiment, the hint provider 223 transmits a read request 810, which includes a logical block address LBAa in the host memory 22 indicated by the map hint command 700, to the host device 20 (or the host controller 21), thereby obtaining one or more logical addresses 820 (or one or more logical address ranges including one or more logical addresses 820) from an area of the host memory 22 corresponding to the logical block address LBAa. For example, the map hint command 700 may include a first logical block address within the host memory 22, in which a first logical address associated with a first command CMD1 is stored, and a second logical block address within the host memory 22, in which a second logical address associated with a second command CMD2 is stored. The host device 20 (or host controller 21) may, in response to a read request 810 of the hint provider 223, transmit a logical address 820 (or a logical address range) associated with the first command CMD1 and the second command CMD2 to the hint provider 223. The logical address 820 of FIG. 8A may correspond to the number of logical blocks 722 and the start logical block address 723 of FIG. 7A.

Additionally, the host device 20 (or host controller 21) may further transmit priority information 830 of the logical address 820 to the hint provider 223 in response to a read request 810 of the hint provider 223. The priority information 830 of the logical address 820 may include the priority level of each logical address (or logical address range) among a predetermined number of priority levels.

Referring to FIG. 8B, the command handler 221 may fetch a map hint command 700' queued in a command queue 23 of the host memory 22 of the host device 20, and transmit the fetched map hint command 700' to the hint provider 223. Through this, the hint provider 223 may obtain one or more logical addresses or logical address ranges (e.g., a first logical address range associated with a first command CMD1 and a second logical address range associated with a second command CMD2) included in the map hint command 700'. Additionally, the hint provider 223 may obtain priority information of one or more logical addresses (or logical address ranges).

Unlike the embodiments described above with reference to FIGS. 8A and 8B, the host device 20 may transmit a logical address 820, which is associated with a command to be queued in the command queue 23 of the host device 20, to the storage controller in various ways. For example, the host device 20 may transmit a map hint command including information associated with a logical address 820 to the storage controller, transmit the logical address 820 to the storage controller using an out-of-band OOB channel, or transmit the logical address 820 to the storage controller by setting a PCI register.

FIG. 9 is a drawing for explaining steps S640 and S650 of FIG. 6 according to one embodiment of the present disclosure.

A storage controller (e.g., 200 of FIGS. 5A and 5B) may request a mapping table corresponding to a logical address (e.g., 820 of FIG. 8A) or a logical address range obtained at step S630 of FIG. 6 to a non-volatile memory device 300_1.

The hint provider 223 may transmit the logical address obtained at step S630 of FIG. 6 to the map loader 225.

In one embodiment, the hint provider 223 (or the host interface circuit 211 of FIG. 1) may generate a logical address list 910 including one or more logical addresses or one or more logical address ranges obtained in step S630 of FIG. 6, and transmit the generated logical address list 910 to the map loader 225 (or the flash translation layer 215 of FIG. 1). For example, the logical address list 910 may include a first logical address LOG1 associated with the first command CMD1 of FIGS. 7A and 7B and a second logical address LOG2 associated with the second command CMD2.

The map loader 225 (or the flash translation layer 215 of FIG. 1) may, in response to receiving the logical address list 910, transmit a map loading request 920 to the non-volatile memory device 300_1 to request loading/storing of at least one mapping table 930 associated with map information data corresponding to one or more logical addresses included in the received logical address list 910.

In one embodiment, the map loading request 920 may include a logical address associated with a particular command (e.g., a starting block logical address and a number of logical blocks). The map loader 225 may store at least one mapping table in the volatile memory 230 by requesting at least one mapping table associated with map information data corresponding to a logical address and the number of logical blocks associated with a specific command to the non-volatile memory device 300_1.

In one embodiment, the non-volatile memory device 300_1 may transmit at least one mapping table 930 to the volatile memory 230 in response to a map loading request 920 from a map loader 225 or a storage controller (e.g., 200 of FIG. 5B). For example, at least one mapping table 930 may include a first mapping table MT1 including a first physical address PHY1 corresponding to a first logical address LOG1, and a second mapping table MT2 including a second physical address PHY2 corresponding to a second logical address LOG2.

In another embodiment, the non-volatile memory device 300_1 may transmit at least one mapping table 930 to the storage controller (or volatile memory 230 of the storage controller) in response to a map loading request 920 of the map loader 225 or the storage controller (e.g., 200 of FIG. 5A).

In another embodiment, the non-volatile memory device 300_1 may transmit a part of the map information data set to the storage controller in response to a map loading request 920 from the map loader 225 or the storage controller (e.g., 200 of FIG. 5A), and the storage controller may generate a mapping table 930 associated with a part of the received map information data set and store it in the volatile memory 230.

FIG. 10 is a flowchart illustrating step S650 of FIG. 6 in detail according to one embodiment of the present disclosure, and FIGS. 11A and 11B are diagrams for explaining a process in which victim data 232_1, 232_2 is determined and overwritten.

Referring to FIG. 10 and FIG. 11A, the cache manager 226 may determine the victim data 232_1 and 232_2 based on the priority of each of the plurality of mapping tables (S652). In FIG. 11A, the victim data 232_1 and 232_2 are illustrated as including two mapping tables, but the embodiment is not limited to this example. For example, the number of mapping tables included in the victim data 232_1 and 232_2 may be determined based on the number of one or more mapping tables 930 to be transferred from the non-volatile memory device 300_1 to the volatile memory 230.

In one embodiment, the cache manager 226 may store priority information 1120 (e.g., priority level) of each mapping table included in the mapping table set 232 in association with each mapping table, and determine victim data 232_1 and 232_2 based on the stored priority information 1120. For example, the cache manager 226 may determine the mapping table with the lowest priority level (e.g., the mapping table with priority level 0) in the mapping table set 232 as the victim data 232_1 and 232_2. The cache manager 226 may select a plurality of mapping tables as victim data 232_1 and 232_2 in ascending order of the priority level.

The hint provider 223 may generate priority information 1110 based on a map hint command (e.g., 700 of FIG. 8A) and transmit the generated priority information 1110 to the cache manager 226. The hint provider 223 may determine a priority level for each of one or more mapping tables corresponding to the logical address based on the priority information 830 of the logical address or logical address range (e.g., priority level of the logical address) included in the map hint command, generate a priority information list 1110 including the priority level for each of the one or more mapping tables, and transmit the priority information list 1110 to the cache manager 226. The cache manager 226 may obtain a priority information list 1110 and update priority information 1120 based on the obtained priority information list 1110.

In one embodiment, the priority level of each logical address or logical address range and the priority level of the mapping table set 232 corresponds to any one of a predetermined number (e.g., three) of priority levels, and the hint provider 223 may use the priority level of a specific logical address (or logical address range) as the priority level of the mapping table corresponding to the logical address (or logical address range).

In another embodiment, the hint provider 223 may determine the priority level of a particular mapping table based on a plurality of priority levels of a plurality of logical addresses (or logical address ranges) associated with a specific mapping table. For example, the hint provider 223 may use the highest priority level among a plurality of priority levels of a plurality of logical addresses (or logical address ranges) as the priority level of the corresponding mapping table. This prevents the problem of mapping tables corresponding to high priority logical addresses being overwritten. In another example, the hint provider 223 may use the lowest priority level among the plurality of priority levels as the priority level of the mapping table, or may use an average or median value of the plurality of priority levels as the priority level.

Additionally or alternatively, the cache manager 226 may obtain a plurality of logical addresses (or logical address ranges) associated with a plurality of commands queued in a command queue, and determine victim data 232_1 and 232_2 based on the logical addresses. For example, the cache manager 226 may determine a part of data excluding mapping tables corresponding to a plurality of logical addresses (or logical address ranges) acquired from among the mapping table set 232, as victim data 232_1 and 232_2. That is, if a mapping table corresponding to one or more logical addresses in the logical address list 910 is already stored in the volatile memory 230, unnecessary overwrite may be prevented by excluding the mapping table from the victim data 232_1 and 232_2.

Additionally or alternatively, the cache manager 226 may exclude the mapping table, on which the flush operation is to be performed, from the victim data 232_1 and 232_2. Through this, unnecessary resource consumption, which may be caused by performing a flush operation before overwriting the victim data 232_1 and 232_2, may be minimized.

The cache manager 226 may transmit information 1130 associated with the determined victim data 232_1 and 232_2 to the map loader 225.

The map loader 225 may transmit a map loading request 920 to a non-volatile memory device 300_1. The map loading request 920, which is transmitted by the map loader 225, may include information 1130 associated with the victim data 232_1 and 232_2. For example, the map loading request 920 may include the address of the victim data 232_1 and 232_2.

Referring to FIG. 10 and FIG. 11B, a non-volatile memory device 300_1 may load/store one or more mapping tables 930 into a volatile memory 230 in response to receiving a map loading request 920. For example, a non-volatile memory device 300_1 may load/store one or more mapping tables 930 into a volatile memory 230 by overwriting determined victim data 232_1 and 232_2 with one or more mapping tables 930 (S654). In another example, the non-volatile memory device 300_1 may transmit one or more mapping tables 930 to a storage controller, and the storage controller may load/store one or more mapping tables 930 into a volatile memory 230.

In one embodiment, the storage controller may load/store one or more mapping tables 930 corresponding to the map hint command into the volatile memory 230 in response to a bit, which indicates whether to store the mapping table into the volatile memory, in the attribute information of the map hint command, being equal to a predetermined value (e.g., 1).

In one embodiment, one or more mapping tables 930 may be loaded/stored in a volatile memory 230 substantially simultaneously. In another embodiment, one or more mapping tables 930 may be loaded/stored in a volatile memory 230 according to the execution order of commands. For example, after the first mapping table MT1 is loaded/saved, the second mapping table MT2 may be loaded/saved in the following order of the first mapping table MT1.

In one embodiment, one or more mapping tables 930 may be loaded/stored while a command that is processed in a previous order of one or more commands corresponding to one or more mapping tables 930 is being fetched or processed by the storage controller.

Referring to FIG. 11B, after one or more mapping tables 930 are overwritten, in some cases, a part (e.g., MT2) of one or more mapping tables 930 may correspond to the lowest priority level (e.g., 0) among the mapping table set 232 stored in the volatile memory 230. In response to one or more mapping tables 930 having a portion corresponding to the lowest priority level among the mapping table set 232, the storage controller may load a mapping table, which corresponds to a logical address (or logical address range) associated with the next map hint command queued in the command queue, from the non-volatile memory device, and store the loaded mapping table, by overwriting the mapping table based on the next map hint command.

In summary of some of the embodiments described above, by loading a mapping table corresponding to a logical address (or a logical address range) associated with a command into a volatile memory 230 in advance before the command is fetched, the mapping table set 232 may be maintained with a smaller capacity than a map information data set (e.g., 310 of FIGS. 5A and 5B) of a non-volatile memory device 300_1, and the mapping table corresponding to the fetched command is pre-loaded into the volatile memory 230, and accordingly the latency, which may occur by loading the mapping table only after the command is fetched, may be minimized.

FIG. 12 is a drawing for explaining steps S660 and S670 of FIG. 6 according to one embodiment of the present disclosure, and FIG. 13 is a drawing for illustrating step S680 of FIG. 6 in detail according to one embodiment of the present disclosure.

Referring to FIG. 12, a command handler 221 may fetch a specific command from a command queue 23 (or a host device 20). For example, the command handler 221 may fetch a first command CMD1 from the command queue 23.

The command handler 221 may obtain a first logical address LOG1 associated with the first command CMD1 from the fetched first command CMD1. The command handler 221 may transmit the acquired first logical address LOG1 to the processor 222.

The processor 222 may process the first command CMD1 using the first logical address LOG1. For example, the processor 222 may transmit a first logical address LOG1 to the map accessor 224, and request a first physical address PHY1 corresponding to the first logical address LOG1 from the map accessor 224.

Referring to FIGS. 12 and 13, in response to receiving a first logical address LOG1, the map accessor 224 may obtain a first mapping table MT1 corresponding to the first logical address LOG1 from a mapping table set 232 of a volatile memory 230. The first mapping table MT1 may be loaded into the volatile memory 230 prior to fetching the first command CMD1. The first mapping table MT1 may include a first logical address LOG1 and a first physical address PHY1 corresponding to the first logical address LOG1.

The map accessor 224 may obtain a first mapping table MT1 loaded into the volatile memory 230, and determine a first physical address PHY1 of a non-volatile memory device 300_1 corresponding to a first logical address LOG1 based on the obtained first mapping table MT1.

The map accessor 224 may transmit the determined first physical address PHY1 to the processor 222.

FIG. 14 is a drawing for explaining step S690 of FIG. 6 according to one embodiment of the present disclosure.

Referring to FIGS. 13 and 14, the storage controller 200 may transmit and receive data DATA to and from a non-volatile memory device 300_1, and transmit an address ADDR including a first physical address PHY1, and a memory device command 1400 associated with the first command CMD1 of FIG. 12, to the non-volatile memory device 300_1. The memory device command 1400 may be a command that instructs the non-volatile memory device 300_1 to perform an operation associated with a command fetched from a host device (e.g., 20 of FIG. 1).

The non-volatile memory device 300_1 may perform an operation requested by the storage controller 200, based on a first physical address PHY1 and a memory device command 1400 received from the storage controller 200. For example, the first command CMD1 of FIG. 12 is a read command, a write command, or a TRIM command, and the control logic circuit (e.g., 323 of FIG. 2) of the non-volatile memory device 300_1 may perform a read operation, a write operation, or a TRIM operation for a specific location of the memory cell array 321 based on the received memory device command 1400 (e.g., CMD of FIG. 2).

The present disclosure is not limited to the above-described embodiments and the attached drawings, and various substitutions, modifications, and changes may be made by those skilled in the art without departing from the technical spirit of the present disclosure, and this will also fall within the scope of the present disclosure. For example, one or more steps of a process described with reference to a flowchart illustrated in some drawings may be omitted, the order of each step may be changed, one or more steps may be performed with temporal overlap, or one or more steps may be performed repeatedly multiple times.

## Claims

1. A storage system comprising:
a non-volatile memory device (300_1) configured to store a map information data set (310) for converting a logical address into a physical address; and
a storage controller (200) configured to:
store, based on the map information data set (310), a mapping table set (232) into a volatile memory (230);
receive a first logical address range associated with a first command (CMD1) to be queued in a command queue of a host device; and
store, a first mapping table (MT1) which is associated with first map information data corresponding to the first logical address range among the map information data set (310), into the volatile memory (230).

2. The storage system as claimed in claim 1, further comprising:
the host device (20) comprising the command queue (23) configured to queue commands,
wherein the host device (20) is configured to transmit, to the storage controller (200), the first logical address range which is associated with the first command (CMD1) to be queued in the command queue (23) of the host device (20).

3. The storage system as claimed in claim 2, wherein after storing the first mapping table (MT1) into the volatile memory (230), the storage controller (200) is further configured to:
fetch the first command (CMD1) from the host device (20);
obtain, from the fetched first command (CMD1), a first logical address (LOG1) to be accessed by the first command (CMD1);
determine, based on the first mapping table (MT1) stored in the volatile memory (230), a first physical address (PHY1) of the non-volatile memory device (300_1) corresponding to the first logical address (LOG1); and
transmit, to the non-volatile memory device (300_1), a memory device command (1400) instructing the non-volatile memory device (300_1) to perform an operation associated with the first command (CMD1), and the determined first physical address (PHY1) of the non-volatile memory device (300_1),
wherein the first logical address (LOG1) is included in the first logical address range.

4. The storage system as claimed in claim 2 or 3, wherein the host device (20) is further configured to transmit, to the storage controller (200), a second logical address range associated with a second command (CMD2) to be queued in the command queue (23) and to be processed in a next order of the first command (CMD1), and
wherein the storage controller (200) is further configured to:
receive the second logical address range; and
store a second mapping table (MT2), which is associated with second map information data corresponding to the second logical address range among the map information data set (310), into the volatile memory (230), after storing the first mapping table (MT1) into the volatile memory (230).

5. The storage system as claimed in any one of claims 2 to 4, wherein the host device (20) is further configured to transmit the first logical address range to the storage controller (200) by transmitting a start logical block address (723) and a number of logic blocks (722) associated with the first command (CMD1).

6. The storage system as claimed in any one of claims 2 to 5, wherein a size of the mapping table set (232) is smaller than a size of the map information data set (310).

7. The storage system as claimed in any one of claims 2 to 6, wherein the map information data set (310) comprises a plurality of logical addresses corresponding to a total number of logic blocks and a plurality of physical addresses corresponding to the plurality of logical addresses.

8. The storage system as claimed in any one of claims 2 to 7, wherein the host device (20) is further configured to:
transmit, to the storage controller (200), a dataset management command (700) which comprises a logical block address in a host memory of the host device (20) in which the first logical address range is stored; and
transmit the first logical address range to the storage controller (200) in response to a request from the storage controller (200) about an area of the host memory corresponding to the logical block address,
wherein the dataset management command (700) further comprises attribute information (703) of the dataset management command (700),
wherein the attribute information (703) comprises a bit (704) indicating whether a mapping table is to be stored in the volatile memory (230), and
wherein the storage controller (200) is further configured to store the first mapping table (MT1) in the volatile memory (230) in response to the bit (704) in the attribute information (703) corresponding to a predetermined value.

9. The storage system as claimed in any one of claims 2 to 8, wherein the host device (20) is further configured to transmit the first logical address range to the storage controller (200) by transmitting a map hint command (700) comprising the first logical address range to the storage controller (200), and
wherein the storage controller (200) is further configured to obtain the first logical address range from the map hint command (700).

10. The storage system as claimed in any one of claims 2 to 9, wherein the host device (20) is further configured to transmit the first logical address range to the storage controller (200) using an out-of-band, OOB, channel, or to transmit the first logical address range to the storage controller (200) by setting a peripheral component interconnect, PCI, register.

11. The storage system as claimed in any one of claims 1, wherein the storage controller (200) is further configured to:
store a priority level of each mapping table included in the mapping table set (232);
determine a mapping table with a lowest priority level among the mapping table set (232) as victim data;
store the first mapping table (MT1) into the volatile memory (230) by overwriting the determined victim data with the first mapping table (MT1);
obtain, from the host device (20), a priority level of the first logical address range;
determine, based on the priority level of the first logical address range, a priority level of the first mapping table (MT1); and
store the determined priority level of the first mapping table (MT1) in association with the first mapping table (MT1).

12. The storage system as claimed in claim 11, wherein the priority level of the first logical address range corresponds to one of a predetermined number of priority levels,
wherein the priority level of each mapping table of the mapping table set (232) corresponds to one of the predetermined number of priority levels, and
wherein the storage controller (200) is configured to set the priority level of the first logical address range as the priority level of the first mapping table (MT1).

13. The storage system as claimed in claim 11, wherein the storage controller (200) is further configured to:
obtain a priority level of each of one or more logical address ranges associated with the first mapping table (MT1); and
determine the priority level of the first mapping table (MT1) based on the priority level of the first logical address range and the priority level of each of the one or more logical address ranges,
wherein the priority level of the first logical address range and the priority level of each of the one or more logical address ranges correspond to any one of a predetermined number of priority levels, and
wherein the storage controller (200) is further configured to set the priority level of the first mapping table (MT1) as a highest priority level among the priority level of the first logical address range and the priority level of each of the one or more logical address ranges.

14. The storage system as claimed in claim 11, wherein the priority level of the first mapping table (MT1) corresponds to a lowest priority level among the mapping table set (232) stored in the volatile memory (230),
wherein the host device (20) is further configured to transmit a second logical address range, which is associated with a second command (CMD2) to be queued in the command queue (23) of the host device (20), to the storage controller (200), and
wherein the storage controller (200) is further configured to:
obtain the second logical address range; and
store a second mapping table (MT2) in the volatile memory (230) by overwriting the first mapping table (MT1) with the second mapping table (MT2) associated with second map information data corresponding to the acquired second logical address range among the map information data set (310), in response to the priority level of the first mapping table (MT1) corresponding to the lowest priority level among the mapping table set (232) stored in the volatile memory (230).

15. A method of operating a storage system comprising a host device (20) comprising a command queue (23) configured to queue commands, a non-volatile memory device (300_1) configured to store a map information data set (310) for converting a logical address into a physical address, and a storage controller (200) configured to store a mapping table set (232) into a volatile memory (230) based on the map information data set (310), the method comprising:
transmitting, by the host device (20), a first logical address range associated with a first command (CMD1) to be queued in the command queue (23), to the storage controller (200);
receiving, by the storage controller (200), the first logical address range from the host device (20); and
storing, by the storage controller (200), a first mapping table (MT1) associated with first map information data corresponding to the first logical address range among the map information data set (310), into the volatile memory (230).
